# DEMANDE DE BREVET EUROPEEN

(11) **EP 2 366 574 A1**
(43) Date de publication de la demande: **21.09.2011**
(21) Numéro de dépôt: 11305143.7
(22) Date de dépôt: 10.02.2011
(51) Int. Cl.: B60J 7/22

(54) **Agencement d'un filet anti remous a l'interieur d'un vehicule automobile du type cabriolet**

(30) Priorité: 01.03.2010 FR 1051453
(71) Demandeur: Renault S.A.S., 92100 Boulogne-Billancourt (FR)
(72) Inventeur: Bouillon, Jean-Charles, 78940, La Queue Lez Yvelines (FR); Guerlin, Philippe, 91540, Mennecy (FR)

(57) **Abrégé**

Agencement d'un filet anti-remous (20) à l'intérieur d'un véhicule automobile du type cabriolet, le filet anti-remous (20) étant porté par une partie avant d'un support (22) qui comporte des moyens de fixation avant (24) et des moyens de fixation arrière (26) sur le véhicule, caractérisé en ce que les moyens de fixation arrière (26) sont formés par des pattes latérales (28) munies d'un doigt longitudinal (34) comportant une extrémité (36) formant crochet vers le haut, le doigt (34) étant apte à occuper :
- une position d'utilisation dans laquelle il est au moins en partie inséré à l'intérieur d'une ouverture (42) de sortie de sangle de ceinture de sécurité ménagée dans une pièce d'habillage (43) du véhicule, et
- une position anti-basculement dans laquelle, le doigt (34) s'étant déplacé vers l'avant sous l'effet d'un choc, le crochet (36) du doigt (34) coopère alors avec un bord supérieur (52) de l'ouverture (42), de façon à empêcher le filet anti-remous (20) de basculer vers l'avant.

## Description

L'invention concerne un agencement d'un filet anti-remous à l'intérieur d'un véhicule automobile, le filet anti-remous étant porté par une partie avant d'un support qui comporte des moyens de fixation avant et des moyens de fixation arrière sur le véhicule.

Les véhicules de type cabriolets sont souvent équipés d'un filet anti-remous monté en option derrière les sièges avant, au niveau des sièges arrière du véhicule.

Le filet anti-remous est généralement porté par une traverse avant d'un support en forme de cadre qui est fixé en quatre points à des éléments d'habillage du véhicule.

Ainsi, le cadre comporte deux moyens de fixation arrière formés par des pattes d'orientation longitudinale destinées à être insérées dans des sorties de sangle de ceintures de sécurité ménagées dans un élément d'habillage du véhicule. Ensuite, une fois les pattes insérées dans les sorties de sangles, le cadre est verrouillé au moyen de deux points de fixation avant, formés par deux axes d'orientation transversale qui sont rétractables et qui sont aptes à coopérer avec des trous ménagés dans un élément d'habillage latéral.

Les moyens de fixation arrière doivent permettre de gérer les contraintes de dimensionnement et ainsi autoriser de grandes dispersions selon une direction transversale entre les habillages et le filet. Il est cependant nécessaire d'éviter des bruits de battement du filet en roulement. Par ailleurs, en cas de choc, il est impératif que le filet ne bascule pas en avant au risque de percuter les occupants situés à l'avant.

Il existe actuellement plusieurs types de moyens de fixation arrière.

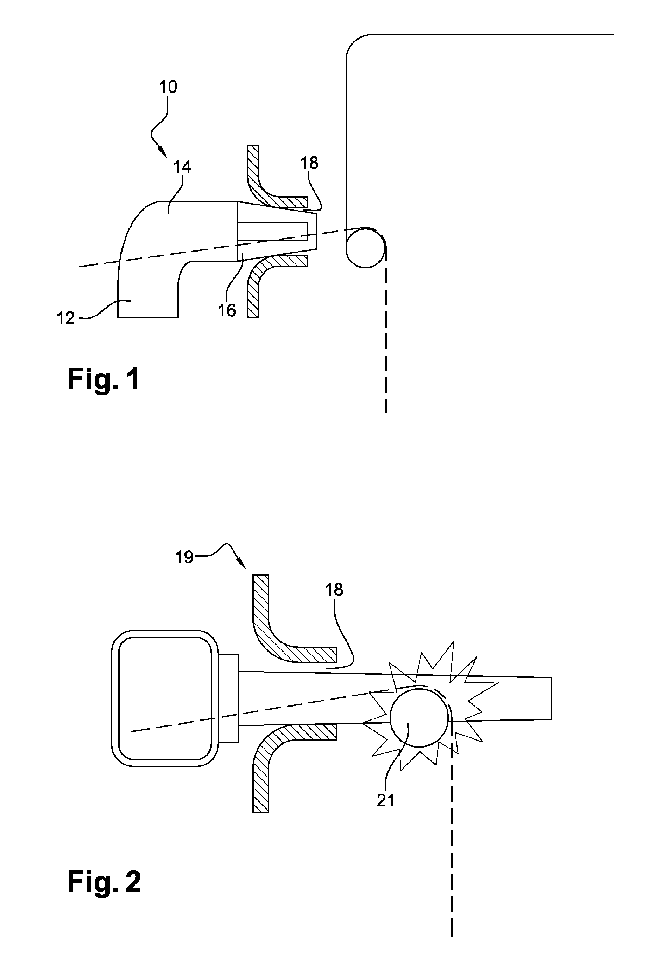

Selon un premier mode de réalisation de l'état de la technique, représenté à la figure 1, les moyens de fixation arriére sont formés par une patte 10 présentant une partie sensiblement verticale 12 et une partie recourbée 14 vers l'extérieur sensiblement horizontale. La patte 10 présente un plan médian longitudinal. L'extrémité de la partie recourbée 14 de la patte comporte un élément en caoutchouc 16 destiné à étre montée serré dans une sortie de sangle de ceinture de sécurité 18. Ce dispositif présente l'avantage d'être simple et de ne pas générer de bruits, mais il présente également des inconvénients. Tout d'abord, cette solution nécessite un certain volume entre le renvoi de sangle situé derrière l'habillage et l'extrémité de la patte, afin d'éviter qu'ils n'entrent en contact l'un avec l'autre. En outre, cette solution nécessite que l'ouverture de sortie de sangle présente une hauteur importante, ce qui n'est pas esthétique quand le filet n'est pas en place, car on voit ce qui est situé sous l'habillage.

Selon un deuxième mode de réalisation, présenté à la figure 2 , les moyens de fixation sont formés par une patte de grande longueur 19 destinée à être introduite à l'intérieur de couverture de sortie de sangle 18. Cette solution présente l'avantage, du fait de la longueur des pattes 19, de garantir l'absence de basculement du filet en cas de choc. Cependant, ce dispositif présente l'inconvénient d'être très intrusif en raison de la longueur des pattes 19, qui risquent d'entrer en collision avec un renvoi de ceinture 21 situé sous l'habillage.

Afin de pallier ces inconvénients, l'invention a pour objet un agencement d'un filet anti-remous qui soit compatible avec les contraintes d'environnement, qui soit esthétique, qui ne génère pas de bruits parasites et qui évite le basculement du filet en cas de choc.

A cet effet, l'invention propose un agencement à l'intérieur d'un véhicule automobile d'un filet anti-remous du type cité ci-dessus, caractérisé en ce que les moyens de fixation arrière sont formés par des pattes latérales munies d'un doigt longitudinal comportant une extrémité formant crochet vers le haut, le doigt étant apte à occuper ;
- une position d'utilisation dans laquelle il est au moins en partie inséré à l'intérieur d'une ouverture de sortie de sangle de ceinture de sécurité ménagée dans une pièce d'habillage du véhicule, et
- une position anti-basculement dans laquelle, le doigt s'étant déplacé vers l'avant et vers le haut sous l'effet d'un choc, le crochet du doigt coopère alors avec un bord supérieur de l'ouverture, de façon à empêcher le filet anti-remous de basculer vers l'avant.

Selon d'autres caractéristiques de l'invention:
- La longueur du doigt est prévue pour que, en position d'utilisation, l'extrémité du doigt formant crochet soit à distance d'un élément de renvoi de la sangle de ceinture localisé, derrière l'élément d'habillage, de manière à éviter une interférence entre ladite extrémité et ledit élément de renvoi.
- Une partie du doigt, opposée à l'extrémité formant crochet, est revêtue d'un élément de rattrapage de dispersions, élément de rattrapage étant logé, lorsque le doigt est en position d'utilisation, dans un renfoncement ménagé dans l'élément d'habillage autour de l'ouverture de sortie de sangle.
- La forme de l'élément de rattrapage de dispersions et celle du renfoncement sont complémentaires, de façon que le montage de l'élément de rattrapage dans le renfoncement soit serré.
- L'élément de rattrapage des dispersions présente, de part et d'autre du doigt une pluralité de rainures verticales supérieures et inférieures, les rainures s'étendant selon un plan longitudinal de façon à améliorer le rattrapage des dispersions

D'autres caractéristiques et avantages de l'invention apparaîtront à la lecture de la description d'exemples de réalisation d'un agencement d'un filet anti-remous en référence aux dessins annexés dans lesquels :
- La figure 1 est une vue en coupe latérale d'un premier mode de réalisation d'un moyen de fixation d'un filet anti-remous selon l'état de la technique.
- La figure 2 est une vue en coupe latérale d'un deuxième mode de réalisation d'un moyen de fixation d'un filet selon l'état de la technique.
- La figure 3 est une vue générale en perspective d'un filet anti-remous selon l'invention.
- La figure 4 est une vue en perspective d'un moyen de fixation arrière du filet de la figure 3
- La figure 5 est une vue en coupe latérale du moyen de fixation arrière de la figure 4.

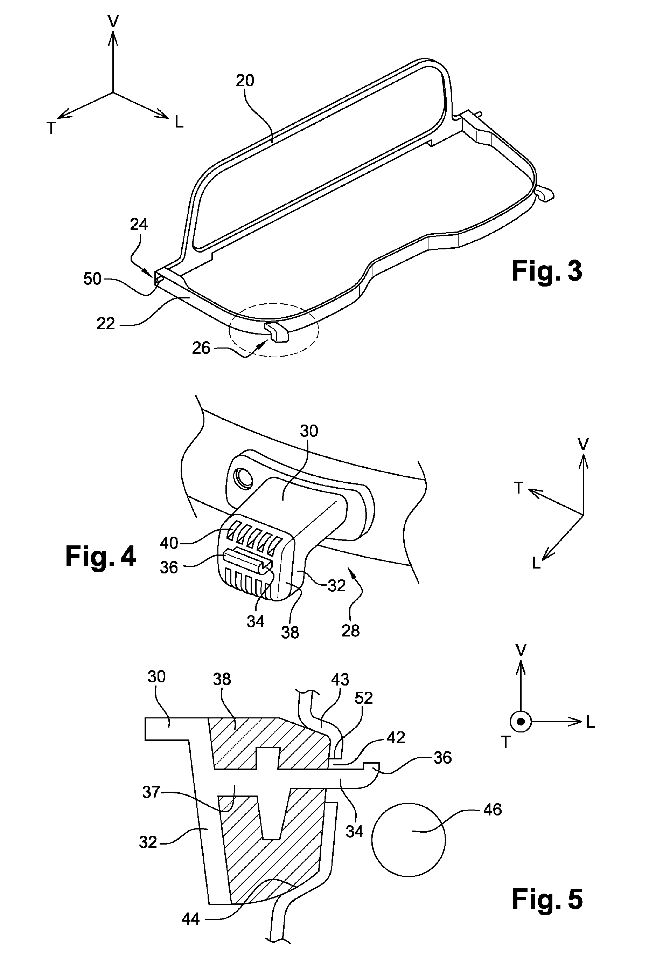

Dans la description qui suit, nous prendrons à titre non limitatif une orientation longitudinate, verticale et transversale indiquée par le trièdre L,V,T des figures 3 à 5.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 3, un filet anti-remous 20 orienté selon un plan transversal est porté par un support 22, s'étendant selon un plan horizontal et destiné à être fixé entre les sièges avant et les sièges arrière du véhicule.

Le support 22 comporte des moyens de fixation avant 24 et des moyens de fixation arrière 26.

Tel que décrit à la figure 4, les moyens de fixation arrière 26 sont formés par des pattes latérales 28 d'orientation longitudinale. Chaque patte 28 présente une première partie d'orientation sensiblement horizontal 30 et une deuxième partie coudée vers le bas 32, depuis laquelle s'étend un doigt 34 selon un plan sensiblement horizontal. L'extrémité 36 du doigt 34 forme crochet vers le haut.

Une portion 37 du doigt 34 opposée à l'extrémité 36 est munie d'un élément de rattrapage des dispersions 38, prenant appui contre la partie coudée 32 de la patte 28. L'élément de rattrapage 38 est en matériau élastiquement déformable tel que du caoutchouc par exemple. L'élément de rattrapage 38 peut comporter au-dessus et en-dessous du doigt 34 une pluralité de rainures parallèles 40 orientées selon des plans longitudinaux, ces rainures 40 permettant d'améliorer le rattrapage des dispersions.

Tel que représenté à la figure 5, chaque patte 28 est destinée à coopérer avec une ouverture 42 de sortie de sangle de ceinture de sécurité arrière (non représentée) ménagée dans un élément d'habillage arrière 43 du véhicule localisé au voisinage des dossiers de sièges arrière. L'ouverture 42 se trouve au fond d'un renfoncement 44 formé dans l'élément d'habillage 43.

Ainsi, la patte 28 est insérée à l'intérieur de couverture 42 jusqu'à ce que l'élément de rattrapage 38 vienne en appui contre la surface de l'élément d'habillage 44, La forme de l'élément de rattrapage 38 est complémentaire de celle du renfoncement 44 et le montage de l'élément 38 dans le renfoncement 44 est serré, ce qui permet d'assurer un bon maintien et un bon rattrapage des dispersions.

Lorsque le doigt 34 est inséré à l'intérieur de l'ouverture 42, il se trouve dans un plan situé au dessus d'un élément de renvoi 46 de la ceinture situé derrière l'élément d'habillage 44. Par ailleurs, la longueur du doigt 34 est prévue pour que son extrémité 36 n'interfère pas avec l'élément de renvoi 46.

Tel que représenté à la figure 3, le support 22 de filet anti-remous comporte également des moyens de fixation avant 24 formés par des tiges rétractables 50 d'orientation transversale aptes à coopérer avec un orifice (non représenté) ménagé dans un élément d'habillage avant (non représenté) du véhicule.

Une fois les moyens de fixation arrière 26 insérés dans les ouvertures 42 de sortie de sangle, il est alors possible de fixer la partie avant du support 22 de filet anti-remous à l'aide des moyens de fixation avant 24, en insérant les tiges rétractables 50 dans les trous prévus dans l'élément d'habillage avant.

Le filet 20 est alors solidement fixé au véhicule, les moyens de rattrapage 38 permettant d'éviter la génération de bruits intempestifs. De plus, des moyens permettent d'éviter le basculement dudit filet 20 en cas de choc.

En effet, lorsqu'il se produit un choc, le support 22 du filet 20 a tendance à être projeté vers l'avant, les moyens de fixation arrière 26 se dégageant des ouvertures 42 de sortie de sangle, ce qui entraine alors un basculement vers l'avant du filet 20 autour d'un axe formé par les deux tiges 50 risquant ainsi d'occasionner des blessures aux passagers avant.

Ainsi, selon l'invention, en cas de déplacement du support 22 vers l'avant, chaque doigt 34 se déplace vers l'avant et vers le haut sous l'effet de la rotation du filet 20 autour des tiges 50. Le crochet 36 formé à l'extrémité du doigt 34 coopère alors avec un bord supérieur 52 de l'ouverture 42 de sortie de sangle, limitant ainsi la course du doigt 34 et permettant ainsi d'empêcher le basculement du filet 20.

Ainsi le filet anti-remous 20 selon invention permet d'utiliser des moyens de fixation arrière 26 dans lesquels les pattes sont courtes et comportent des moyens anti-basculement.

## Revendications

1. Agencement d'un filet anti-remous (20) à l'intérieur d'un véhicule automobile, le filet anti-remous (20) étant porté par une partie avant d'un support (22) qui comporte des moyens de fixation avant (24) et des moyens de fixation arrière (26) sur le véhicule, **caractérisé en ce que** les moyens de fixation arrière (26) sont formés par des pattes latérales (28) munies d'un doigt longitudinal (34) comportant une extrémité (36) formant crochet vers le haut, le doigt (34) étant apte à occuper :
- une position d'utilisation dans laquelle est au moins en partie inséré à l'intérieur d'une ouverture (42) de sortie de sangle de ceinture de sécurité ménagée dans une pièce d'habillage (43) du véhicule, et
- une position anti-basculement dans laquelle, le doigt (34) s'étant déplacé vers l'avant et vers le haut sous l'effet d'un choc, le crochet (36) du doigt (34) coopère alors avec un bord supérieur (52) de couverture (42), de façon à empêcher le filet anti-remous (20) de basculer vers l'avant.

2. Agencement d'un filet anti-remous (20) selon la revendication 1, **caractérisé en ce que** la longueur du doigt (34) est prévue pour que, en position d'utilisation, l'extrémité (36) du doigt (34) formant crochet soit à distance d'un élément de renvoi (46) de la sangle de ceinture localisé derrière l'élément d'habillage (43), de manière à éviter une interférence entre ladite extrémité (36) et ledit élément de renvoi (46).

3. Agencement d'un filet anti-remous (20) selon l'une quelconque des revendications précédentes, **caractérisé en ce qu'**une portion (37) du doigt (34), opposée à l'extrémité (36) formant crochet, est revêtue d'un élément de rattrapage de dispersions (38), ledit élément de rattrapage (38) étant logé, lorsque le doigt (34) est en position d'utilisation, dans un renfoncement (44) ménagé dans l'élément d'habillage (43) autour de l'ouverture (42) de sortie de sangle.

4. Agencement d'un filet anti-remous (20) selon la revendication précédente, **caractérisé en ce que** la forme de l'élément de rattrapage de dispersions (38) et celle du renfoncement (44) sont complémentaires, de façon que le montage de l'élément de rattrapage (38) dans le renfoncement (44) soit serré.

5. Agencement d'un filet anti-remous (20) selon l'une quelconque des revendications 3 ou 4, **caractérisé en ce que** l'élément de rattrapage des dispersions (38) présente, de part et d'autre du doigt (34) une pluralité de rainures verticales supérieures et inférieures (40), les rainures (40) s'étendant selon un plan longitudinal de façon à améliorer le rattrapage des dispersions.
